# EUROPEAN PATENT APPLICATION

(11) **EP 3 585 090 A1**
(43) Date of publication of application: **25.12.2019**
(21) Application number: 18754495.2
(22) Date of filing: 09.02.2018
(51) Int. Cl.: H04W 24/04

(54) **WLAN MEASUREMENT METHOD, DEVICE AND SYSTEM FOR MOBILE NETWORK CONTROL TERMINAL**

(30) Priority: 15.02.2017 CN 201710080797
(71) Applicant: ZTE Corporation, Shenzhen, Guangdong 518057 (CN)
(72) Inventor: WU, Hao, Shenzhen Guangdong 518057 (CN); YANG, Kun, Shenzhen Guangdong 518057 (CN); DING, Jianfeng, Shenzhen Guangdong 518057 (CN); LU, Chen, Shenzhen Guangdong 518057 (CN)
(74) Representative: Rosenberg, Muriel Sylvie
(86) International application number: PCT/CN2018/075929
(87) International publication number: WO 2018/149362

(57) **Abstract**

A WLAN measurement method for a mobile network control terminal comprises: receiving measurement configuration information sent by a base station, the measurement configuration information comprising measure target information for executing measurement on an unknown WLAN access point; configuring a local measurement configuration parameter according to a configuration parameter included in the received measurement target information; determining a measurement target according to the local measurement configuration parameter; and executing WLAN access point measurement on the determined measurement target.

## Description

### FIELD OF THE INVENTION

The present disclosure relates to, but is not limited to, the field of communication technology, particularly to a WLAN measurement method, device and system for mobile network control terminal.

### BACKGROUND

WLAN (Wireless Local Area Networks) and mobile communication technology have become two successful wireless communication technologies. They have always complemented with each other for many years. Wi-Fi technology of WLAN has advantages that it runs on an unlicensed spectrum such that anyone can deploy a Wi-Fi network, and it can support almost any smart handheld devices or Internet of Things devices as desirable. Wi-Fi is more suitable for indoor applications with large capacity, high density and low mobility. On the other hand, mobile communication technology has swept the world in the past few decades, creating a huge wireless wide area network, such as GSM (Global System for Mobile communication), WCDMA (Wideband Code Division Multiple Access) and LTE (Long Term Evolution) networks. It has the advantages of ubiquitous outdoor coverage and seamless mobility, and more perfectly supports real-time applications such as voice and stream media. The combination of the two technologies will bring great hope to the whole industry.

3GPP (3rd Generation Partnership Project) launched LWA (LTE WLAN Aggregation) technology combining mobile networks with WLAN. With LWA technology, LTE data payload can be separated, such that some traffic is transmitted over WLAN, and the rest is transmitted through LTE itself, thereby greatly improving the performance of LTE service.

### SUMMARY

The following is a summary of subject matters of the disclosure which will be describe in detail. This summary is not intended to limit the scope of claims.

In order to help a base station configure LWA, a terminal can perform WLAN measurement under the control of the base station. In the development of LWA technology, since the expectation of LWA was relatively simple at the initial stage, the terminal only needed to connect to one of listed WLAN access points given by the base station to send and receive data. However, with the expansion of convergence scenario, especially considering the uncertainty of terminal mobility, the WLAN access point configured by the base station cannot always cover the mobile range of the terminal, which requires the terminal to measure and report an unknown WLAN in the surrounding coverage. This measurement requirement needs to be supported.

A WLAN measurement method, device and system for mobile network control terminal are provided in this present disclosure, so that the terminal can realize measure and report on the unknown WLAN in the surrounding coverage.

In an embodiment of the present disclosure, there is provided a WLAN measurement method for mobile network control terminal, including steps of: receiving measurement configuration information sent from a base station, the measurement configuration information including measurement target information for executing measurement on an unknown WLAN access point; configuring a local measurement configuration parameter according to a configuration parameter included in the received measurement target information; determining a measurement target according to the local measurement configuration parameter; and executing measurement on a WLAN access point according to the determined measurement target.

In an embodiment of the present disclosure, there is also provided a WLAN measurement method for mobile network control terminal, including steps of: pre-configuring a wireless access point mobile set WLAN mobility Set to a terminal; sending measurement configuration information to the terminal, the measurement configuration information including measurement target information or report configuration information, or the measurement target information and the report configuration information for executing measurement on an unknown WLAN access point; and receiving the measurement report generated by the terminal according to the report configuration information.

In an embodiment of the present disclosure, there is also provided a WLAN measurement device for mobile network control terminal, including: a first receiving module configured to: receive measurement configuration information sent from a base station, the measurement configuration information including measurement target information for executing measurement on an unknown WLAN access point; and a processing module configured to: configure a local measurement configuration parameter according to a configuration parameter included in the received measurement target information, determine a measurement target according to the local measurement configuration parameter, and execute measurement on the WLAN access point according to the determined measurement target.

In an embodiment of the present disclosure, there is also provided a terminal including the WLAN measurement device for mobile network control terminal as set forth above.

In an embodiment of the present disclosure, there is also provided a WLAN measurement device for mobile network control terminal, including: a second sending module configured to: pre-configure a wireless access point mobile set to a terminal, and configured to: send measurement configuration information to the terminal, the measurement configuration information including measurement target information or report configuration information, or the measurement target information and the report configuration information for executing measurement on an unknown WLAN access point; and a second receiving module configured to: receive the measurement report generated by the terminal according to the report configuration information.

In an embodiment of the present disclosure, there is also provided a base station, including the WLAN measurement device for mobile network control terminal as set forth above.

In an embodiment of the present disclosure, there is also provided a WLAN measurement system for mobile network control terminal, including: a terminal including: a first receiving module configured to: receive measurement configuration information sent from a base station, the measurement configuration information including measurement target information for executing measurement on an unknown WLAN access point; and a processing module configured to: configure a local measurement configuration parameter according to a configuration parameter included in the received measurement target information, determine a measurement target according to the local measurement configuration parameter; and execute measurement on the WLAN access point according to the determined measurement target, and a base station, including a second sending module configured to: pre-configure a wireless access point mobile set to a terminal, and configured to: send measurement configuration information to the terminal, the measurement configuration information including measurement target information or report configuration information, or the measurement target information and the report configuration information for executing measurement on an unknown WLAN access point.

In an embodiment of the present disclosure, there is also provided a WLAN measurement method for mobile network control terminal, including steps of: pre-configuring, by a base station, a wireless access point mobile set to a terminal, and sending measurement configuration information to the terminal, the measurement configuration information at least including measurement target information or report configuration information, or the measurement target information and the report configuration information for executing measurement on an unknown WLAN access point; receiving, by the terminal, the measurement configuration information sent from the base station; configuring, by the terminal, a local measurement configuration parameter according to a configuration parameter included in the received measurement target information; determining, by the terminal, a measurement target by terminal according to the local measurement configuration parameter; and executing, by the terminal, measurement on WLAN access point according to the determined measurement target.

In an embodiment of the present disclosure, there is also provided a computer readable storage medium, storing computer executable instructions, wherein when the computer executable instructions are executed, the WLAN measurement method for mobile network control terminal can be implemented.

The above technical schemes implement that the terminal can perform measurement on the WLAN by configuring corresponding parameters under the control of the base station. In the embodiments of the present disclosure, the measurement result is also reported. Through the embodiments of the present disclosure, the base station can obtain more WLAN measurement results, and based on these results, it can be more reasonable to configure whether the terminal can continue to use the LWA technology, and according to the measurement result, the Mobile Set can be adjusted in time to ensure that the terminal can always find the appropriate WLAN access point to send and receive data from the Mobile Set, reducing the probability of dropping the line from the WLAN.

Other aspects can be understood upon reading and understanding the drawings and detailed description.

### BRIEF DESCRIPTION OF THE DRAWINGS

FIG. 1 is a flow chart of a WLAN measurement method for a mobile network control terminal according to a first embodiment of the present disclosure;
FIG. 2 is a flow chart of a WLAN measurement method for a mobile network control terminal according to a second embodiment of the present disclosure;
FIG. 3 is a schematic block diagram of a WLAN measurement device for a mobile network control terminal according to a fifth embodiment of the present disclosure;
FIG. 4 is a schematic block diagram of a WLAN measurement device for a mobile network control terminal according to a sixth embodiment of the present disclosure;
FIG. 5 is a schematic block diagram of a WLAN measurement system for a mobile network control terminal according to a seventh embodiment of the present disclosure;
FIG. 6 is a flow chart of a WLAN measurement method for a mobile network control terminal according to an eighth embodiment of the present disclosure.

### DETAILED DESCRIPTION OF THE EMBODIMENTS

Embodiments of the present disclosure will be described below with reference to the accompanying drawings.

### First Embodiment

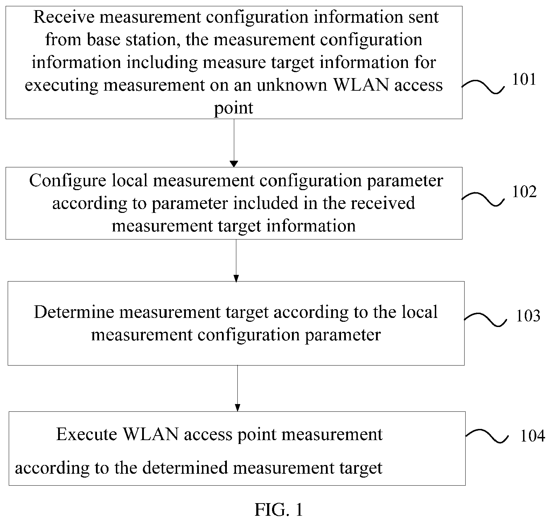

Referring to FIG. 1, FIG. 1 shows a flow chart of a WLAN measurement method for a mobile network control terminal according to first embodiment of the present disclosure. In this embodiment, a parameter of Unknown WLAN Indication (unknown wireless access point measurement indication) is introduced. The method of this embodiment can be applied to terminal and includes steps of:
Step 101, receiving, by a terminal, measurement configuration information sent from a base station, the measurement configuration information including measurement target information for executing measurement on an unknown WLAN access point;
Step 102, configuring, by the terminal, a local measurement configuration parameter according to a configuration parameter included in the received measurement target information;
Step 103, determining, by the terminal, a measurement target according to the local measurement configuration parameter; and
Step 104, executing, by the terminal, measurement on the WLAN access point according to the determined measurement target.

In this embodiment, the measurement target information for executing the measurement on the unknown WLAN access point in Step 101 may include one or a combination of two or more of the following parameters:
An unknown wireless access point measurement indication (Unknown WLAN Indication), configured to indicate whether to execute unknown WLAN access point measurement or not, wherein in one embodiment, a value thereof is "true" or "false", wherein the parameter having a value of "true" indicates that the terminal measures the unknown WLAN access point, and the parameter having a value of "false" indicates that the terminal does not measure the unknown WLAN access point;
A list of wireless access points to be added (WLAN -To Add Mod List), configured to indicate the WLAN access point that needs to be added as the measurement target, a value of which is an identifier of WLAN access point;
A list of wireless access points to be removed (WLAN -To Remove List), configured to indicate the WLAN access point that needs to be removed from the measurement target, a value of which is an identifier of WLAN access point; and
A carrier frequency (Carrier Freq), configured to indicate carrier or waveband information of WLAN, wherein in the case of carrier information, a value thereof is a frequency of one or more carriers; and in the case of waveband information, a value thereof is one or more of values {2.4, 5, 60}, representing {2.4 GHZ band, 5 GHZ band and 60 GHZ band}, respectively.

In this embodiment, Step 102 of configuring the local measurement configuration parameter by terminal according to the parameter included in the received measurement target information may include the following optional manner.

When the presence of the received configuration parameter in the local measurement configuration parameter is determined, the terminal updates the local configuration parameter according the received configuration parameter. For example, when the parameter received by the terminal includes "WLAN - To Add Mod List" and the terminal also determines the presence of "WLAN - To Add Mod List" in the local configuration parameter, then the terminal adds an identifier (id) of WLAN access point in the received "WLAN - To Add Mod List" parameter to the local "WLAN - To Add Mod List" parameter.

Or, when the terminal determines the absence of the received configuration parameter in the local measurement configuration parameter, the terminal saves the received configuration parameter. For example, when the received parameter includes "Unknown WLAN Indication" but the local configuration parameter of the terminal doesn't include the parameter, then the parameter and its value are saved at the local.

In this embodiment, Step 103 of determining the measurement target by the terminal according to the local measurement configuration parameter may be as followings.

Under the condition where the local measurement configuration parameter includes "Unknown WLAN Indication" and the value of the parameter is "true",
when the local measurement configuration parameter further includes the "Carrier Freq" parameter, then the terminal determines the WLAN access point on a frequency or waveband designated by the "Carrier Freq" parameter to be the measurement target; when the local measurement configuration parameter does not include the "Carrier Freq" parameter, then the terminal determines the WLAN access point on all frequencies or wavebands to be the measurement target.

Under the condition where the local measurement configuration parameter does not include "Unknown WLAN Indication", or includes the "Unknown WLAN Indication" parameter but the value thereof is "false",
when the local measurement configuration parameter further includes the "Carrier Freq" parameter, then the terminal determines the WLAN access point on a frequency or waveband designated by the "Carrier Freq" parameter matching the identifier in "WLAN - To Add Mod List" to be the measurement target; when the local measurement configuration parameter does not include the "Carrier Freq" parameter, then the terminal determines the WLAN access point on all frequencies or wavebands matching the identifier in "WLAN - To Add Mod List" to be the measurement target.

It can be seen that, in this embodiment, when the value of "Unknown WLAN Indication" parameter is "true", the "WLAN - To Add Mod List" parameter will be ignored.

### Second Embodiment

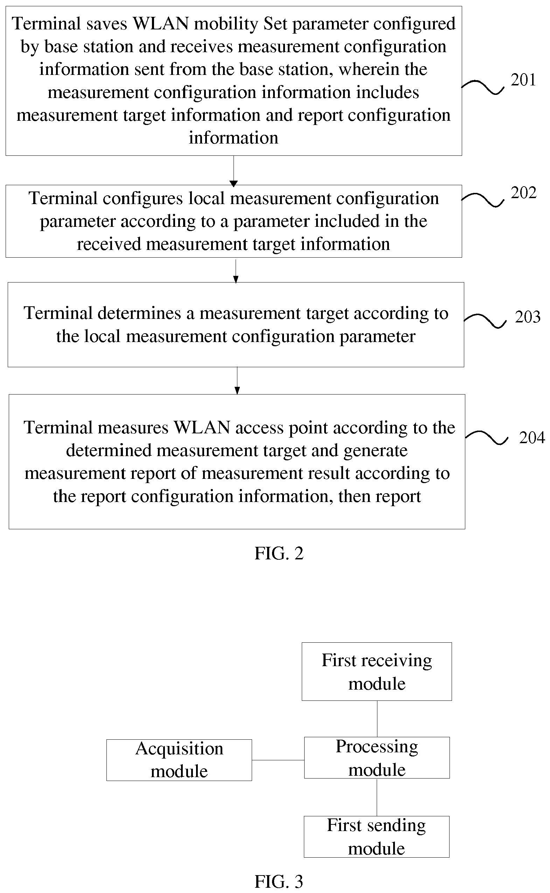

Referring to FIG. 2, FIG. 2 shows a flow chart of a WLAN measurement method for mobile network control terminal according to the second embodiment of the present disclosure. In this embodiment, an event parameter for unknown WLAN measurement is introduced on the basis of the first embodiment. The terminal receives the report configuration information sent from a base station, and reports a measurement result according to a value of the event parameter in the report configuration information.

The method of this embodiment may include steps of:
Step 201, under the condition where the terminal is configured by the base station to use LWA (LTE WLAN Aggregation), saving parameters configured by base station locally, which are a wireless access point mobile set(WLAN mobility Set) parameter, maintaining a list of WLAN access points and configured to indicate the WLAN access points connectable by the terminal during usage of LWA; and measurement configuration information received by the terminal from the base station, including the measurement target information and report configuration information.

Optionally, the measurement target information includes one or a combination of two or more of the following parameters:
An unknown wireless access point measurement indication (Unknown WLAN Indication), configured to indicate whether to execute unknown WLAN access point measurement or not, wherein in one embodiment, a value thereof is "true" or "false", wherein, the parameter having a value of "true" indicates that the terminal measures the unknown WLAN access point, and the parameter having a value of "false" indicates that the terminal does not measure the unknown WLAN access point;
A list of wireless access points to be added (WLAN -To Add Mod List), configured to indicate the WLAN access point that needs to be added as the measurement target, a value of which is an identifier of WLAN access point;
A list of wireless access points to be removed (WLAN -To Remove List), configured to indicate the WLAN access point that needs to be removed from the measurement target, a value of which is an identifier of WLAN access point; and
A carrier frequency (Carrier Freq), configured to indicate carrier or waveband information of WLAN, wherein in the case of carrier information, a value thereof is a frequency of one or more carriers; and in the case of waveband information, a value thereof is one or more of values {2.4, 5, 60}, representing {2.4 GHZ band, 5 GHZ band and 60 GHZ band}, respectively.

Optionally, the report configuration information includes one or a combination of two or more of the following parameters:
A measurement report type (Trigger Type): configured to indicate that the type of measurement report is an event trigger report or a periodic report, wherein when a value thereof is set to "event", it is indicated that the terminal needs to execute the event trigger report, when the value is set to "periodical", it is indicated that the terminal needs to execute the periodic report, when Trigger Type is event, the report configuration information includes the following parameters of Hysteresis, Time To Trigger and Event-id and corresponding thresholds.

A Hysteresis (Hysteresis):configured to judge an event trigger condition, a value of which is set by the base station according to application requirement, wherein a fluctuation space is defined through hysteresis value to avoid an unstable measurement result;
A Trigger time (Time To Trigger): a time period between event trigger and report;
Event parameter: in this embodiment, the report configuration message includes at least one set of the following event parameters, and each set of event parameters includes one of the following event identifiers (event-id) and corresponding threshold values:
A first event identifier (Event-id): X1, indicating that a measurement result of WLAN access point (signal strength, channel utilization, etc.) is higher than a first threshold.

In this embodiment, the base station can make the purpose of measurement more definite by setting the threshold values.

X1 event threshold (X1-Threshold): a first threshold value required to trigger X1 event report. The base station can set corresponding threshold values according to actual application requirements, and add the threshold values to the report configuration information to send out to the terminal;
A second event identifier (Event-id): X2, indicating that measurement results of all WLAN access points in WLAN mobility Set are lower than a second threshold X2-threshold1, while other measurement results of WLAN access points that are not in WLAN mobility Set are higher than a third threshold X2-threshold2.

A second threshold X2-threshold1: a second threshold value required to trigger X2 event report.

A third threshold X2-threshold2: a third threshold value required to trigger X2 event report.

A third event identifier (Event-id): X3, indicating that measurement results of all WLAN access points in WLAN mobility Set are lower than a fourth threshold.

A fourth threshold X3-threshold: a fourth threshold value required to trigger X3 event report.

Step 202, configuring, by the terminal, the local measurement configuration parameter according to the parameters included in the received measurement configuration information.

An optional setting manner may be as follows.

When the received configuration parameter exists in the local measurement configuration parameter, the local configuration parameter is updated according the received configuration parameter. For example, when the received parameter includes "WLAN - To Add Mod List" and the terminal also determines the presence of "WLAN - To Add Mod List" in the local configuration parameter, then the terminal adds the id of WLAN access point in the received parameter of "WLAN - To Add Mod List" to the local parameter of "WLAN - To Add Mod List".

Or, when the terminal determines the absence of the received configuration parameter in the local measurement configuration parameter, the terminal saves the received configuration parameters. For example, when the received parameter includes "Unknown WLAN Indication" but the local configuration parameter doesn't include the parameter, then the parameter and its value are saved at the local.

Step 203, determining, by the terminal, the measurement target according to the local measurement configuration parameter, which may include:
Under the condition where the measurement configuration parameter includes "Unknown WLAN Indication" and the value of the parameter is "true", when the measurement configuration parameter further includes the "Carrier Freq" parameter, then the WLAN access point on a frequency or waveband designated by the "Carrier Freq" parameter will be measured; when the measurement configuration parameter does not include the "Carrier Freq" parameter, then the WLAN access points on all frequencies or wavebands will be measured.

Under the condition where the measurement configuration parameter does not include "Unknown WLAN Indication", or includes "Unknown WLAN Indication" parameter but the value thereof is "false",
when the measurement configuration parameter further includes the "Carrier Freq" parameter, then the WLAN access point on a frequency or waveband designated by the "Carrier Freq" parameter matching the identifier in "WLAN - To Add Mod List" will be measured; when the measurement configuration parameter does not include the "Carrier Freq" parameter, then the WLAN access point on all frequencies or wavebands matching the identifier in "WLAN - To Add Mod List" will be measured.

Step 204, measuring, by the terminal, the WLAN access point according to the determined measurement target, generating a measurement report of measurement result according to the parameter of the report configuration information, and reporting the measurement report.

In this embodiment, as an optional manner, in Step 204, in the case where Trigger Type is event and event-id is X1, if WLAN mobility Set does not include an identifier of any WLAN access point and it is assumed a measurement result of a certain WLAN access point has a valve of Ms, the WLAN access point is not included in the measurement report corresponding to the measurement task and satisfies an event trigger condition:
Ms - Hysteresis> X1-Threshold,
and the measurement result continuously satisfies the event trigger condition for a period of Time To Trigger, then the WLAN access point is added to the measurement report corresponding to the measurement task. If there is no measurement report corresponding to the measurement task, then a measurement report corresponding to the measurement task is created.

When Trigger Type is event and event-id is X1, if the above measurement result of WLAN access point satisfies an event leaving condition:
Ms+ Hysteresis< X1-Threshold,
and the measurement result continuously satisfies the event leaving condition for a period of Time To Trigger, then the WLAN access point is deleted from the measurement report corresponding to the measurement task.

If the measurement report does not contain any WLAN access point, then the measurement report corresponding to the measurement task will be deleted.

In this embodiment, as a manner, in Step 204 when Trigger Type is event and event-id is X2, it is assumed that a measurement result of WLAN access point in WLAN mobility Set is Ms and a measurement result of WLAN access point that is not in the WLAN mobility Set is Mn, if the measurement result satisfies an event trigger condition:
the measurement results of all the WLAN access points listed in WLAN mobility Set satisfy a condition of Ms+ Hysteresis<X2-Threshold1, while the measurement result of at least one WLAN access point that is not in WLAN mobility Set satisfies a condition of Mn- Hysteresis> X2- Threshold2, the WLAN access point is not included in the measurement report corresponding to the measurement task,
and the measurement result continuously satisfies the event trigger condition for a period of Time To Trigger, then the WLAN access point that is not in the WLAN mobility Set is added to the measurement report corresponding to the measurement task. If there no measurement report corresponding to the measurement task, a measurement report corresponding to the measurement task is created.

When Trigger Type is event and event-id is X2, if the measurement result satisfies an event leaving condition:
the measurement result of at least one WLAN access point in the WLAN mobility Set satisfies a condition of Ms- Hysteresis> X2-Threshold1,
and the measurement result continuously satisfies the event leaving condition for a period of Time To Trigger, then all WLAN access points are deleted from the measurement report corresponding to the measurement task.

Optionally, the measurement report corresponding to the measurement task is deleted.

When Trigger Type is event and event-id is X2, if the measurement result of WLAN access point that has been added to the measurement report corresponding to the measurement task satisfies an event leaving condition:
Mn+ Hysteresis< X2-Threshold2,
and the measurement result continuously satisfies the event leaving condition for a period of Time To Trigger, then the WLAN access point is deleted from the measurement report corresponding to the measurement task.

When the measurement report does not contain any WLAN access point, then measurement report corresponding to the measurement task is deleted.

In this embodiment, as an optional manner, in Step 204, in the case where Trigger Type is event and event-id is X3, it is assumed that a measurement result of WLAN access point in WLAN mobility Set is Ms, when the measurement result satisfies an event trigger condition:
the measurement results of all WLAN access points listed in WLAN mobility Set satisfy a condition of Ms+ Hysteresis< X3-Threshold1,
and the measurement result continuously satisfies the event trigger condition for a period of Time To Trigger, then the measurement report is sent to the base station.

When Trigger Type is event and event-id is X3, it is assumed that a measurement result of WLAN access point in WLAN mobility Set is Ms, if the measurement result satisfies an event leaving condition:
the measurement result of at least one WLAN access point in the WLAN mobility Set satisfies a condition of Ms- Hysteresis> X3-Threshold1,
and the measurement result continuously satisfies the event leaving for a period of Time To Trigger, then the measurement report corresponding to the measurement task is deleted.

### Third Embodiment

There is provided a WLAN measurement method for mobile network control terminal in the third embodiment of this disclosure. In this embodiment, Unknown WLAN Indication can shield carrier Freq parameter.

The method according to this embodiment may include steps of:
Step 301, receiving, by the terminal, measurement configuration information sent from a base station, the measurement configuration information including measurement target information.

The measurement target information may include one or more of the following parameters:
An unknown wireless access point measurement indication (Unknown WLAN Indication), configured to indicate whether to execute unknown WLAN access point measurement or not, wherein in one embodiment, a value thereof is "true" or "false", wherein the parameter having a value of "true" indicates that the terminal measures the unknown WLAN access point, and the parameter having a value of "false" indicates that the terminal does not measure the unknown WLAN access point;
A list of wireless access points to be added (WLAN -To Add Mod List), configured to indicate the WLAN access point that needs to be added as the measurement target, a value of which is an identifier of WLAN access point;
A list of wireless access points to be removed (WLAN -To Remove List), configured to indicate the WLAN access point that needs to be removed from the measurement target, a value of which is an identifier of WLAN access point; and
A carrier frequency (Carrier Freq), configured to indicate carrier or waveband information of WLAN, wherein in the case of carrier information, a value thereof is a frequency of one or more carriers; and in the case of waveband information, a value thereof is one or more of values {2.4, 5, 60}, representing {2.4 GHZ band, 5 GHZ band and 60 GHZ band}, respectively.

In this embodiment, Step 302 of configuring the local measurement configuration parameter by terminal according to the parameter included in the received measurement target information may include the following optional setting manner.

When the presence of the received configuration parameter in the local measurement configuration parameter is determined, the terminal updates the local configuration parameter by terminal according the received configuration parameter. For example, when the parameter received by the terminal includes "WLAN - To Add Mod List" and the terminal determines the presence of "WLAN - To Add Mod List" in the local configuration parameter, then the terminal adds an identifier (id) of WLAN access point in the received "WLAN - To Add Mod List" parameter to the local "WLAN - To Add Mod List" parameter.

Or, when the terminal determines the absence of the received configuration parameter in the local measurement configuration parameter, the terminal saves the received configuration parameters. For example, when the received parameter includes "Unknown WLAN Indication" but the local configuration parameter of the terminal doesn't include the parameter, then the parameter and its value are saved at the local.

In this embodiment, Step 303 of determining the measurement target by terminal according to the local measurement configuration parameter may be as followings.

Under the condition where the measurement configuration parameter includes "Unknown WLAN Indication" and the value of the "Unknown WLAN Indication" parameter is "true", then WLAN access points on all frequencies or wavebands are measured.

This is the difference between this embodiment and the first embodiment. In this embodiment, Unknown WLAN Indication can shield the Carrier Freq parameter.

Under the condition where the local measurement configuration parameter does not include "Unknown WLAN Indication" or includes "Unknown WLAN Indication" parameter and the value thereof is "false", when the local measurement configuration parameter further includes the "Carrier Freq" parameter, then the terminal measures the WLAN access point on a frequency or waveband designated by the "Carrier Freq" parameter matching the identifier in "WLAN - To Add Mod List"; when the local measurement configuration parameter does not include "Carrier Freq" parameter, then the terminal measures the WLAN access point on all frequencies or waveband matching the identifier in "WLAN - To Add Mod List".

It can be seen that in this embodiment, when the value of "Unknown WLAN Indication" parameter is "true", "WLAN - To Add Mod List" parameter will be ignored.

### Fourth Embodiment

There is provided a WLAN measurement method for a mobile network control terminal in the fourth embodiment of the present disclosure. In this embodiment, an event parameter for unknown WLAN measurement is introduced based on the third embodiment. The terminal may receive the report configuration information sent from a base station, and report a measurement result according to a value of the event parameter in the report configuration information.

Step 401, under the condition where the terminal is configured by the base station to use LWA (LTE WLAN Aggregation), saving parameters configured by the base station locally, which are a wireless access point mobile set(WLAN mobility Set) parameter, maintaining a list of WLAN access points and configured to indicate the WLAN access points connectable by the terminal during usage of LWA; and measurement configuration information received by the terminal from the base station, including measurement target information and report configuration information.

Optionally, the measurement target information includes one or a combination of two or more of the following parameters:
An unknown wireless access point measurement indication (Unknown WLAN Indication), configured to indicate whether to execute unknown WLAN access point measurement or not, wherein in one embodiment, a value thereof is "true" or "false", wherein, the parameter having a value of "true" indicates that the terminal measures the unknown WLAN access point, and the parameter having a value of "false" indicates that the terminal does not measure the unknown WLAN access point;
A list of wireless access points to be added (WLAN -To Add Mod List), configured to indicate the WLAN access point that needs to be added as the measurement target, a value of which is an identifier of WLAN access point;
A list of wireless access points to be removed (WLAN -To Remove List), configured to indicate the WLAN access point that needs to be removed from the measurement target, a value of which is an identifier of WLAN access point; and
A carrier frequency (Carrier Freq), configured to indicate carrier or waveband information of WLAN, wherein in the case of carrier information, a value thereof is a frequency of one or more carriers; and in the case of waveband information, a value thereof is one or more of values {2.4, 5, 60}, representing {2.4 GHZ band, 5 GHZ band and 60 GHZ band}, respectively.

Optionally, the report configuration information includes one or a combination of two or more of the following parameters:
A measurement report type (Trigger Type): configured to indicate that the type of measurement report is an event trigger report or a periodic report, wherein when a value thereof is set to "event", it is indicated that the terminal needs to execute the event trigger report, when the value is set to "periodical", it is indicated that the terminal needs to execute the periodic report, when Trigger Type is event, the report configuration information includes the following parameters of Hysteresis, Time To Trigger and Event-id and corresponding thresholds;
A Hysteresis (Hysteresis): configured to judge an event trigger condition.

A Trigger time (Time To Trigger): a time period between event trigger and report;
Event parameter: in this embodiment, the report configuration message includes at least one set of the following event parameters, and each set of event parameters includes one of the following event identifiers (event-id) and corresponding threshold values:
A first event identifier (Event-id): X1, indicating that a measurement result of WLAN access point (signal strength, channel utilization, etc.) is higher than a first threshold.

In this embodiment, the base station can make the purpose of measurement more definite by setting the threshold values.

X1 event threshold (X1-Threshold): a first threshold value required to trigger X1 event report. The base station can set corresponding threshold values according to actual application requirements, and add the threshold values to the report configuration information to send out to the terminal;
A second event identifier (Event-id): X2, indicating that measurement results of all WLAN access points in WLAN mobility Set are lower than a second threshold X2-threshold1, while measurement results of WLAN access points that are not in WLAN mobility Set are higher than a third threshold X2-threshold2.

A second threshold X2-threshold1: a second threshold value required to trigger X2 event report.

A third threshold X2-threshold2: a third threshold value required to trigger X2 event report.

A third event identifier (Event-id): X3, indicating that measurement results of all WLAN access points in WLAN mobility Set are lower than a fourth threshold.

A fourth threshold X3-threshold: a fourth threshold value required to trigger X3 event report.

Step 402, configuring, by the terminal, the local measurement configuration parameter according to the parameters included in the received measurement configuration information.

An optional setting manner may be as follows.

When the received configuration parameter exists in the local measurement configuration parameter, the local configuration parameter is updated according the received configuration parameter. For example, when the received parameter includes "WLAN - To Add Mod List" and the terminal also determines the presence of "WLAN - To Add Mod List" in the local configuration parameter, then the terminal adds the id of WLAN access point in the received parameter of "WLAN - To Add Mod List" to the local parameter of "WLAN - To Add Mod List".

Or, when the terminal determines the absence of the received configuration parameter in the local measurement configuration parameter, the terminal saves the received configuration parameters. For example, when the received parameter includes "Unknown WLAN Indication" but the local configuration parameter doesn't include the "Unknown WLAN Indication" parameter, then the "Unknown WLAN Indication" parameter and its value are saved at the local.

Step 403, determining, by the terminal, the measurement target according to the local measurement configuration parameter, which may include:
Under the condition where the measurement configuration parameter includes "Unknown WLAN Indication" and the value of the parameter is "true", WLAN access points on all frequencies or wavebands are measured. This is different from the second embodiment. In this embodiment, "Unknown WLAN Indication" can shield Carrier Freq parameter.

Under the condition where the measurement configuration parameter does not include "Unknown WLAN Indication", or includes "Unknown WLAN Indication" parameter but the value thereof is "false",
when the measurement configuration parameter further includes the "Carrier Freq" parameter, then the WLAN access point on a frequency or waveband designated by the "Carrier Freq" parameter matching the identifier in "WLAN - To Add Mod List" will be measured; when the measurement configuration parameter does not include the "Carrier Freq" parameter, then the WLAN access point on all frequencies or wavebands matching the identifier in "WLAN - To Add Mod List" will be measured.

Step 404, measuring, by the terminal, the WLAN access point according to the determined measurement target, generating a measurement report of measure result according to the parameter of the report configuration information, and reporting the measurement report.

In this embodiment, as an optional manner, in Step 404, in the case where Trigger Type is event and event-id is X1, if WLAN mobility Set does not include an identifier of any WLAN access point and it is assumed a measurement result of a certain WLAN access point has a valve of Ms and satisfies an event trigger condition:
Ms - Hysteresis> X1-Threshold,
and the measurement result continuously satisfies the event trigger condition for a period of Time To Trigger, then the WLAN access point is added to the measurement report corresponding to the measurement task.

When Trigger Type is event and event-id is X1, if the above measurement result of WLAN access point satisfies an event leaving condition:
Ms+ Hysteresis< X1-Threshold,
and the measurement result continuously satisfies the event trigger condition for a period of Time To Trigger, then the WLAN access point is deleted from the measurement report corresponding to the measurement task.

If the measurement report does not contain any WLAN access point, then the measurement report corresponding to the measurement task will be deleted.

In this embodiment, as a manner, in Step 404 n the case where Trigger Type is event and event-id is X2, it is assumed that a measurement result of the WLAN access point in WLAN mobility Set is Ms, and a measurement result of the WLAN access point that is not in WLAN mobility Set is Mn, if the measurement result satisfies an event trigger condition:
the measurement results of all the WLAN access points listed in WLAN mobility Set satisfy a condition of Ms+ Hysteresis<X2-Threshold1, while the measurement result of at least one WLAN access point that is not in WLAN mobility Set satisfies a condition of Mn- Hysteresis> X2- Threshold2,
and the measurement result continuously satisfies the event trigger condition for a period of Time To Trigger, then the WLAN access point that is not in the WLAN mobility Set is added to the measurement report corresponding to the measurement task.

When Trigger Type is event and event-id is X2, if the measurement result satisfies an event leaving condition:
the measurement result of at least one WLAN access point in the WLAN mobility Set satisfies a condition of Ms- Hysteresis> X2-Threshold1,
and the measurement result continuously satisfies the event leaving condition for a period of Time To Trigger, then all WLAN access points are deleted from the measurement report corresponding to the measurement task.

Optionally, the measurement report corresponding to the measurement task is deleted.

When Trigger Type is event and event-id is X2, if the measurement result of WLAN access point that has been added to the measurement report corresponding to the measurement task satisfies an event leaving condition:
Mn+ Hysteresis< X2-Threshold2,
and the measurement result continuously satisfies the event leaving condition for a period of Time To Trigger, then the WLAN access point is deleted from the measurement report corresponding to the measurement task.

When the measurement report does not contain any WLAN access point, then measurement report corresponding to the measurement task is deleted.

In this embodiment, as an optional manner, in Step 404, in the case where Trigger Type is event and event-id is X3, it is assumed that a measurement result of WLAN access point in WLAN mobility Set is Ms, when the measurement result satisfies an event trigger condition:
the measurement results of all WLAN access point listed in WLAN mobility Set satisfy a condition of Ms+ Hysteresis< X3-Threshold1,
and the measurement result continuously satisfies the event trigger condition for a period of Time To Trigger, then the measurement report is sent to base station.

When Trigger Type is event and event-id is X3, it is assumed that a measurement result of WLAN access point in WLAN mobility Set is Ms, if the measurement result satisfies an event leaving condition:
the measurement result of at least one WLAN access point in the WLAN mobility Set satisfies a condition of Ms- Hysteresis> X3-Threshold1,
and the measurement result continuously satisfies the event leaving for a period of Time To Trigger, then the measurement report corresponding to the measurement task is deleted.

### Fifth Embodiment

Referring to FIG. 3, FIG. 3 shows a schematic block diagram of a WLAN measurement device for a mobile network control terminal according to the fifth embodiment of the present disclosure. The device may include:
a first receiving module configured to: receive measurement configuration information sent from a base station, the measurement configuration information including measurement target information for executing measurement on an unknown WLAN access point; and
a processing module configured to: configure a local measurement configuration parameter according to a configuration parameter included in the received measurement target information, determine a measurement target according to the local measurement configuration parameter, and execute measurement on the WLAN access point according to the determined measurement target.

Optionally, the measurement target information received by the first receiving module includes one or a combination of two or more of the following parameters:
an unknown wireless access point measurement indication Unknown WLAN Indication, a list of wireless access points to be added WLAN-To Add Mod List, a list of wireless access points to be removed WLAN-To Remove List, and a carrier frequency (Carrier Freq);
wherein, the unknown wireless access point measurement Unknown WLAN Indication has a value of true or false; the list of wireless access points to be added WLAN-To Add Mod List has a value of an identifier of WLAN access point, the list of wireless access points to be removed WLAN-To Remove Mod List has a value of the identifier of WLAN access point.

Optionally, the processing module configured to configure the local measurement configuration parameter by according to the configuration parameter included in the received measurement target information, includes:
when the presence of the received configuration parameter in the local measurement configuration parameter is determined, the local configuration parameter is updated according the received configuration parameter; when that the absence of the received configuration parameter in the local measurement configuration parameter is determined, the received configuration parameter is saved.

Optionally, the processing module configured to determine the measurement target according to the local measurement configuration parameter, includes:
Under the condition where the local measurement configuration parameter includes Unknown WLAN Indication and the value of the parameter is "true",
when the local measurement configuration parameter further includes the Carrier Freq parameter, then the terminal determines the WLAN access point on a frequency or waveband designated by the Carrier Freq parameter to be the measurement target; when the local measurement configuration parameter does not include the Carrier Freq parameter, then the terminal determines the WLAN access point on all frequencies or wavebands to be the measurement target; or under the condition where the local measurement configuration parameter includes Unknown WLAN Indication and the value of the parameter is true, then measure the WLAN access point on all frequencies or waveband is measured;
under the condition where the local measurement configuration parameter does not include Unknown WLAN Indication, or includes the Unknown WLAN Indication parameter but the value thereof is false,
when the local measurement configuration parameter further includes the Carrier Freq parameter, then the terminal determines the WLAN access point on a frequency or waveband designated by the Carrier Freq parameter matching the identifier in WLAN - To Add Mod List to be the measurement target; when the local measurement configuration parameter does not include the Carrier Freq parameter, then the terminal determines the WLAN access points on all frequencies or wavebands matching the identifier in WLAN - To Add Mod List to be the measurement target.

Optionally, the measurement configuration information received by the first receiving module further includes: report configuration information, and the device further includes:
an acquisition module configured to: acquire a pre-stored wireless access point mobile set WLAN mobility Set.

Optionally, the report configuration information received by the first receiving module includes one or a combination of two or more of the following parameters:
a measurement report type Trigger Type, a hysteresis value Hysteresis, a trigger time Time To Trigger, and event parameter;
wherein, the measurement report type Trigger Type has a value of: event or periodical; and the event parameter include event identifier event-id.

Optionally, the event parameter included in the report configuration information received by the first receiving module at least includes the following event identifiers and corresponding one of threshold values:
a first event identifier X1, indicating that a measurement result of WLAN access point is higher than a first threshold, which corresponds to a first threshold value X1-Threshold;
a second event identifier X2, indicating that measurement results of all WLAN access points in WLAN mobility Set are lower than a second threshold X2-threshold1, while other measurement results of WLAN access points that are not in WLAN mobility Set are higher than a third threshold value X2-threshold 2, which corresponds to a second threshold value X2-threshold1 and a third threshold value X2-threshold 2;
a third event identifier X3, indicating that measurement results of all WLAN access points in WLAN mobility Set are lower than a fourth threshold, which corresponds to a fourth threshold value X3-threshold.

Optionally, the device further includes:
a first sending module configured to: generate a measurement report of the measurement result according to the parameter of the report configuration information, and report it.

Optionally, the first sending module is configured to:
in the case where Trigger Type is event and event-id is X1, when WLAN mobility Set does not include an identifier of any WLAN access point, when the measurement result of WLAN access point having a value of Ms satisfies an event trigger condition:
   Ms - Hysteresis> X1-Threshold,
and the measurement result continuously satisfies the event trigger condition for a period of Time To Trigger , then the WLAN access point is added to the measurement report corresponding to the measurement task.

When Trigger Type is event and event-id is X1, if the above measurement result of WLAN access point satisfies an event leaving condition:
Ms+ Hysteresis< X1-Threshold,
and the measurement result continuously satisfies the event trigger condition for a period of Time To Trigger, then the WLAN access point is deleted from the measurement report corresponding to the measurement task;
in the case where Trigger Type is event and event-id is X2, a measurement result of WLAN access in WLAN mobility Set is Ms, a measurement result of WLAN access point that is not in WLAN mobility Set is Mn, when the measurement result satisfies an event trigger condition:
the measurement results of all the WLAN access points listed in WLAN mobility Set satisfy a condition of Ms+ Hysteresis<X2-Threshold1, while the measurement result of at least one WLAN access point that is not in WLAN mobility Set satisfies a condition of Mn- Hysteresis> X2- Threshold2,
and the measurement result continuously satisfies the event trigger condition for a period of Time To Trigger, then the WLAN access point that is not in the WLAN mobility Set is added to the measurement report corresponding to the measurement task.

In the case where Trigger Type is event and event-id is X2, when measurement result satisfies an event leaving condition:
the measurement result of at least one WLAN access point in the WLAN mobility Set satisfies a condition of Ms- Hysteresis> X2-Threshold1,
and the measurement result continuously satisfies the event leaving condition for a period of Time To Trigger, then all WLAN access points are deleted from the measurement report corresponding to the measurement task.

In the case where Trigger Type is event and event-id is X2, when the measurement result of WLAN access point that has been added to the measurement report corresponding to the measurement task satisfies an event leaving condition:
Mn+ Hysteresis< X2-Threshold2,
and the measurement result continuously satisfies the event leaving condition for a period of Time To Trigger, then the WLAN access point is deleted from the measurement report corresponding to the measurement task.
in the case where Trigger Type is event and event-id is X3, when a measurement result of WLAN access point in WLAN mobility Set is Ms and satisfies an event trigger condition:
the measurement results of all WLAN access points listed in WLAN mobility Set satisfy a condition of Ms+ Hysteresis< X3-Threshold1,
and the measurement result continuously satisfies the event trigger condition for a period of Time To Trigger, then a measurement report is generated;
in the case where Trigger Type is event and event-id is X3, when a measurement result of WLAN access point in WLAN mobility Set is Ms and satisfies an event leaving condition:
the measurement result of at least one WLAN access point in the WLAN mobility Set satisfies a condition of Ms- Hysteresis> X3-Threshold1,
and the measurement result continuously satisfies the event leaving for a period of Time To Trigger, then the measurement report corresponding to the measurement task is deleted.

There is also provided a terminal in this embodiment, including the above WLAN measurement device for the mobile network control terminal.

### Sixth Embodiment

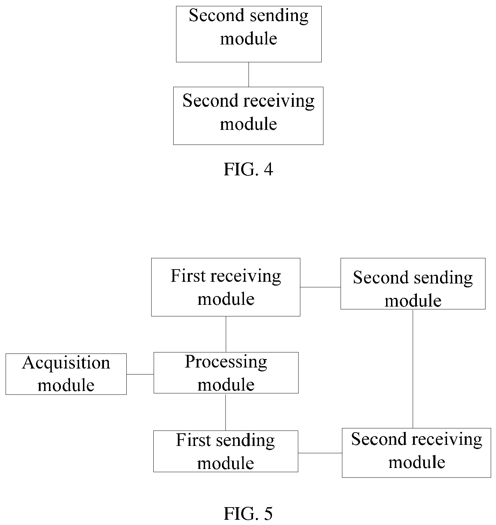

Referring to FIG.4, FIG.4 shows a schematic block diagram of a WLAN measurement device for a mobile network control terminal according to the sixth embodiment of the present disclosure. The device may include:
a second sending module configured to: pre-configure wireless access point mobile set WLAN mobility Set to a terminal, and further configured to: send measurement configuration information to the terminal, the measurement configuration information at least including measurement target information or report configuration information, or the measurement target information and the report configuration information for executing measurement on an unknown WLAN access point; and
a second receiving module configured to: receive the measurement report generated by the terminal according to the report configuration information.

Optionally, the measurement target information sent from the second sending module includes one or a combination of two or more of the following parameters:
an unknown wireless access point measurement indication Unknown WLAN Indication, a list of wireless access points to be added WLAN -To Add Mod List, a list of wireless access points to be removed WLAN -To Remove List, and a carrier frequency Carrier Freq;
the unknown wireless access point measurement Unknown WLAN Indication has a value of true or false; the list of wireless access points to be added WLAN-To Add Mod List has a value of an identifier of WLAN access point, the list of wireless access points to be removed WLAN-To Remove Mod List has a value of the identifier of WLAN access point.

Optionally, the report configuration information includes one or a combination of two or more of the following parameters:
a measurement report type Trigger Type, a hysteresis value Hysteresis, a trigger time Time To Trigger, and event parameter;
wherein, the measurement report type Trigger Type has a value of: event or periodical; and the event parameter includes event identifier event-id.

Optionally, the report configuration information sent from the second sending module at least includes the following event identifiers and one of corresponding threshold values:
a first event identifier X1, indicating that a measurement result of WLAN access point is higher than a first threshold, which corresponds to a first threshold value X1-Threshold;
a second event identifier X2, indicating that measurement results of all WLAN access point in WLAN mobility Set are lower than a second threshold X2-threshold1, while other measurement results of WLAN access points that are not in WLAN mobility Set are higher than a third threshold X2-threshold 2, which corresponds to a second threshold value X2-threshold1 and a third threshold value X2-threshold 2;
a third event identifier X3, indicating that measurement results of all WLAN access point in WLAN mobility Set are lower than a fourth threshold, which corresponds to a fourth threshold value X3-threshold.

Optionally, the second receiving module is configured to:
when Trigger Type is event and event-id is X1, if WLAN mobility Set does not include an identifier of any WLAN access point, when the terminal determines that a measurement result of WLAN access point having a value of Ms satisfies an event trigger condition:
   Ms - Hysteresis> X1-Threshold,
and the measurement result continuously satisfies the event trigger condition for a period of Time To Trigger , the WLAN access point is in measurement report corresponding to the measurement task.

When Trigger Type is event and event-id is X1, if the terminal determines that the above measurement result of the WLAN access point satisfies an event leaving condition;
Ms+ Hysteresis< X1-Threshold,
and the measurement result continuously satisfies the event trigger condition for a period of Time To Trigger, then the WLAN access point is not in the measurement report corresponding to the measurement task.

When Trigger Type is event and event-id is X2, if a measurement result of WLAN access point in WLAN mobility Set is Ms, a measurement result of WLAN access point that is not in WLAN mobility Set is Mn, when the terminal determines that measurement result satisfies an event trigger condition:
the measurement results of all the WLAN access points in the WLAN mobility Set satisfy a condition of Mn+ Hysteresis< X2-Threshold2, while the measurement result of at least one WLAN access point that is not in the WLAN mobility Set satisfies a condition of Ms- Hysteresis> X2-Threshold1,
and the measurement result continuously satisfies the event trigger condition for a period of Time To Trigger, then the WLAN access point that is not in the WLAN mobility Set is in the measurement report corresponding to the measurement task;
when Trigger Type is event and event-id is X2, if the terminal determines that the measurement result satisfies an event leaving condition:
the measurement result of at least one WLAN access point in the WLAN mobility Set satisfies a condition of Ms- Hysteresis> X2-Threshold1,
and the measurement result continuously satisfies event leaving condition for a period of Time To Trigger, the base station does not receive the measurement report;
when Trigger Type is event and event-id is X2, if the measurement result of WLAN access point that has been added to the measurement report corresponding to the measurement task satisfies an event leaving condition:
   Mn+ Hysteresis< X2-Threshold2,
and the measurement result continuously satisfies the event leaving condition for a period of Time To Trigger, the WLAN access point is not in the measurement report corresponding to the measurement task;
when Trigger Type is event and event-id is X3, if the terminal determines that a measurement result of WLAN access point in WLAN mobility Set is Ms and satisfies an event trigger condition:
   the measurement results of all WLAN access points listed in WLAN mobility Set satisfy a condition of Ms+ Hysteresis< X3-Threshold1,
   and the measurement result continuously satisfies the event trigger condition for a period of Time To Trigger, then all the WLAN access points listed in WLAN mobility Set are in the measurement report;
   When Trigger Type is event and event-id is X3, if the terminal determines that a measurement result of WLAN access point in WLAN mobility Set is Ms and satisfies an event leaving condition:
   the measurement result of at least one WLAN access point in the WLAN mobility Set satisfies a condition of Ms- Hysteresis> X3-Threshold1,
   and the measurement result continuously satisfies the event leaving for a period of Time To Trigger, then the base station does not receive the measurement report.

There is also provided a terminal in this embodiment, including the above WLAN measurement device for the mobile network control terminal.

### Seventh Embodiment

FIG. 5 is a schematic block diagram of a system for performing WLAN measurement for mobile network control terminal according to the seventh embodiment of the present disclosure. The system may include:
a terminal, including:
a first receiving module configured to: receive measurement configuration information sent from a base station, the measurement configuration information including measurement target information or report configuration information, or measurement target information and report configuration information for executing measurement on an unknown WLAN access point;
a processing module configured to: configure a local measurement configuration parameter according to a configuration parameter included in the received measurement target information, determine a measurement target according to the local measurement configuration parameter; and execute measurement on the WLAN access point according to the determined measurement target;
an acquisition module configured to: acquire wireless access point mobile set WLAN mobility Set sent from the base station; and
a first sending module configured to: generate a measurement report of measurement result according to the parameter of the report configuration information, and report, and
a base station, including,
a second sending module configured to: pre-configure wireless access point mobile set WLAN mobility Set to terminal, and further configured to: send measurement configuration information to terminal, the measurement configuration information at least includes measurement target information or report configuration information, or the measurement target information and the report configuration information for executing measurement on an unknown WLAN access point; and
a second receiving module configured to: receive the measurement report generated by the terminal according to the report configuration information.

### Eighth Embodiment

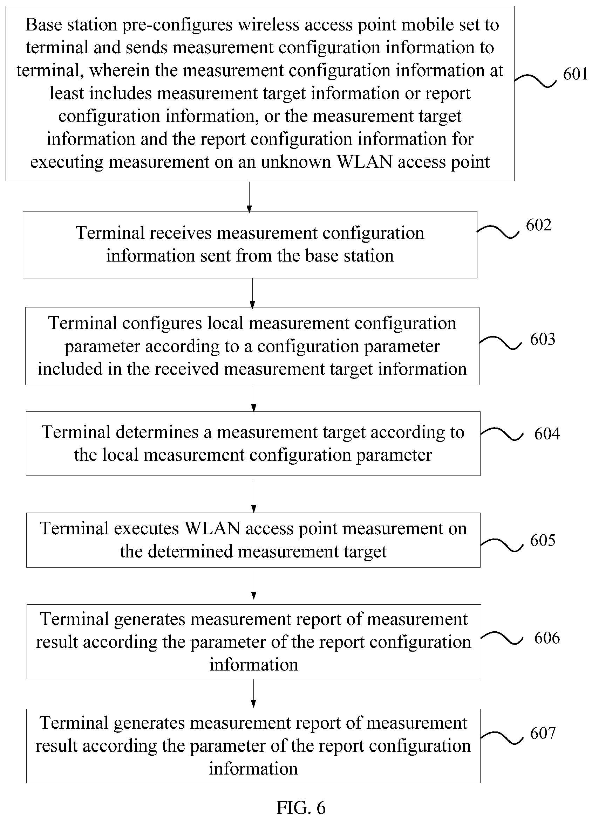

FIG. 6 is a flow chart of a WLAN measurement method for a mobile network control terminal according to the eighth embodiment of the present disclosure. The method may include:
Step 601, pre-configuring, by a base station, a wireless access point mobile set WLAN mobility Set to a terminal and sending measurement configuration information to the terminal, the measurement configuration information at least including measurement target information or report configuration information, or the measurement target information and the report configuration information for executing measurement on an unknown WLAN access point;
Step 602, receiving, by the terminal, the measurement configuration information sent from the base station;
Step 603, configuring, by the terminal, a local measurement configuration parameter according to a configuration parameter included in the received measurement target information;
Step 604, determining, by the terminal, a measurement target according to the local measurement configuration parameter;
Step 605, executing, by the terminal, measurement on WLAN access point according to the determined measurement target;
Step 606, generating, by the terminal, a measurement report of measurement result according to a parameter of the report configuration information; and
Step 607, receiving, by the base station, the measurement report generated by the terminal according to the report configuration information.

For details of the implementation of the seventh embodiment and the eighth embodiment of the present disclosure, reference may be made to the description of other embodiments, and details thereof are not described herein.

In the embodiments of the present disclosure, an indication (indication information) is set to the terminal by the base station, and the terminal sets the measurement target, sets the measurement trigger condition, and reports the measurement result according to the indication. Optionally, the base station sends the measurement configuration information to the terminal, wherein the parameter "Execute unknown WLAN measurement" is included. This parameter can take the value "true" or "false". When the value is "true", it indicates that the terminal is instructed to execute unknown WLAN measurement. When the value is "false", it indicates that the terminal does not execute unknown WLAN measurement, but executes measurement according to the WLAN list designated in the measurement target. After receiving the measurement configuration information sent from the base station, the terminal saves it at the local. If the measurement configuration information includes execute the "Execute unknown WLAN measurement" execute and its value is set to "true", the terminal measures all WLAN access points on specified frequencies. If the measurement configuration does not include the "Execute unknown WLAN measurement" parameter, or if the parameter is included therein but the value is set to "false", then the terminal measures the WLAN access point designated in the WLAN list. The method, the device and system according to the embodiments of the present disclosure allow the terminal to execute measurement on the WLAN by configuring corresponding parameters under the control of the base station.

In an embodiment of the present disclosure, there is also provided a computer readable storage medium further which stores computer executable instructions. The WLAN measurement method for the mobile network control terminal is implemented when the computer executable instructions are executed.

The above-mentioned serial numbers of the embodiments of the present disclosure are merely for the description, and do not represent the advantages and disadvantages of the embodiments. Through the description of the above embodiments, those skilled in the art can clearly understand that the foregoing embodiment method can be implemented by means of software plus an optional general hardware platform, and of course, by hardware. Based on such understanding, the essence or the part that contributes to the related art of the technical solution of the embodiments of the present disclosure may be embodied in the form of a software product in the form of a software product. The software product is stored in a storage medium (such as ROM/RAM, magnetic disk, optical disk) including a number of instructions for causing a terminal device (which may be a cell phone, a computer, a server, or a network device, etc.) to perform the methods described in various embodiments of the present disclosure.

Those ordinary persons skilled in the art will appreciate that all or some of the steps, systems, and functional blocks/units of the methods disclosed above may be implemented as software, firmware, hardware, and suitable combinations thereof. In a hardware implementation, the division between functional modules/units mentioned in the above description does not necessarily correspond to the division of physical components; for example, a physical component may have multiple functions, or one function or step may be composed of several physical components together. Some or all of the components may be implemented as software executed by a processor, such as a digital signal processor or microprocessor, or implemented as hardware, or as an integrated circuit, such as an application specific integrated circuit. Such software may be distributed on a computer readable medium, which may include computer storage media (or non-transitory media) and communication media (or transitory media). As is well known to those ordinary persons skilled in the art, the term computer storage medium includes volatile and nonvolatile, implemented in any method or technology for storing information, such as computer readable instructions, data structures, program modules or other data. Sex, removable and non-removable media. Computer storage media include, but are not limited to, Random Access Memory (RAM), Read-Only Memory (ROM), and Electrically Erasable Programmable Read-only Memory (EEPROM), Flash memory or other memory technology, compact disc read-only memory (CD-ROM), digital versatile disc (DVD) or other optical disc storage, magnetic cassette, magnetic tape, disk storage or other magnetic storage device, or any other medium that can be used to store the desired information and accessed by the computer. Moreover, it is well known to those skilled in the art that communication media typically includes computer readable instructions, data structures, program modules, or other data in a modulated data signal, such as a carrier wave or other transport mechanism, and can include any information delivery media.

A person skilled in the art can understand that the technical solutions of the present disclosure may be made in a modified or equivalent manner, without departing from the spirit and scope of the disclosed technical solutions, which should be included in the scope of the claims of the present disclosure.

### INDUSTRIAL APPLICABILITY

The embodiments of the present disclosure implement that the terminal can perform measurement on the WLAN by configuring corresponding parameters under the control of the base station. In the embodiments of the present disclosure, the measurement result is also reported. Through the embodiments of the present disclosure, the base station can obtain more WLAN measurement results, and based on these results, it can be more reasonable to configure whether the terminal can continue to use the LWA technology, and according to the measurement result, the Mobile Set can be adjusted in time to ensure that the terminal can always find the appropriate WLAN access point to send and receive data from the Mobile Set, reducing the probability of dropping the line from the WLAN.

## Claims

1. A wireless local area network WLAN measurement method for mobile network control terminal, comprising:
receiving measurement configuration information sent from a base station, the measurement configuration information including measurement target information for executing measurement on an unknown WLAN access point;
configuring a local measurement configuration parameter according to a configuration parameter included in the received measurement target information;
determining a measurement target according to the local measurement configuration parameter; and
executing measurement on a WLAN access point according to the determined measurement target.

2. The method according to claim 1, wherein the measurement target information comprises one or a combination of more than one of the following parameters:
an unknown wireless access point measurement indication, a list of wireless access points to be added, a list of wireless access points to be removed, and a carrier frequency.

3. The method according to claim 1, wherein the step of configuring the local measurement configuration parameter according to the configuration parameter included in the received measurement target information, comprises:
in the case where the presence of the received configuration parameter in the local measurement configuration parameter is determined, updating the local measurement configuration parameter according the received configuration parameter; and in the case where the absence of the received configuration parameter in the local measurement configuration parameter, saving the received configuration parameters into the local measurement configuration parameter.

4. The method according to claim 2, wherein the unknown wireless access point measurement indication has a value of true or false; a value of list of wireless access points to be added is an identifier of WLAN access point; and a value of list of wireless access points to be removed is the identifier of WLAN access point.

5. The method according to claim 4, wherein the step of determining the measurement target according to the local measurement configuration parameter, comprises:
in the case where the local measurement configuration parameter includes the unknown wireless access point indication and the value of the parameter is true,
when the local measurement configuration parameter further includes the carrier frequency, determining the WLAN access point on a frequency or waveband designated by the carrier frequency to be a measurement target; when the local measurement configuration parameter does not include the carrier frequency, determining the WLAN access points on all frequencies or wavebands to be the measurement target; or when the local measurement configuration parameter includes the unknown wireless access point indication and the value of the parameter is true, then measuring WLAN access points on all frequencies or the wavebands.

6. The method according to claim 4, wherein the step of determining the measurement target according to the local measurement configuration parameter, comprises:
in the case where the local measurement configuration parameter does not include the unknown wireless access point indication or includes the unknown wireless access point indication but the value is false,
when the local measurement configuration parameter further includes the carrier frequency, determining the WLAN access point on a frequency or waveband designated by the carrier frequency matching the identifier in the list of wireless access points to be added to be the measurement target; when the local measurement configuration parameter does not include the carrier frequency, determining the WLAN access points on all frequencies or wavebands matching the identifier in the list of wireless access points to be added to be the measurement target.

7. The method according to claim 5 or 6, wherein the measurement configuration information further comprises: report configuration information, and the method further comprises:
obtaining a WLAN mobility Set sent from the base station.

8. The method according to claim 7, wherein the report configuration information comprises one or a combination of more than one of the following parameters:
a measurement report type, a hysteresis value, a trigger time, and an event parameter,
wherein a value of the measurement report type is event or periodical; the event parameter comprises an event identifier.

9. The method according to claim 8, wherein the event parameter comprises one of the following event identifiers and corresponding threshold values:
a first event identifier, indicating that a measurement result of WLAN access point is higher than a first threshold, which corresponds to a first threshold value;
a second event identifier, indicating that measurement results of all WLAN access points in WLAN mobility Set are lower than a second threshold, while other measurement results of WLAN access points that are not in WLAN mobility Set are higher than a third threshold value, which corresponds to a second threshold value and a third threshold value; and
a third event identifier, indicating that measurement results of all WLAN access points in WLAN mobility Set are lower than a fourth threshold, which corresponds to a fourth threshold value.

10. The method according to claim 9, further comprising:
generating, by the terminal, a measurement report of the measurement result according to the parameter of report configuration information, and reporting.

11. The method according to claim 10, wherein the step of generating, by the terminal, the measurement report of the measurement result according to the parameter of report configuration information, comprises:
in the case where the measurement report type is event trigger report and the event identifier is the first event identifier, when the wireless access point mobility set does not include the identifier of any WLAN access point, when a WLAN access point is not included in the measurement report corresponding to the measurement task, and the measurement result having a value of MS satisfies an event trigger condition:
a difference between Ms and Hysteresis value is greater than the first threshold,
and the measurement result continuously satisfies the event trigger condition for a period of trigger time, then adding the WLAN access point to the measurement report corresponding to the measurement task;
in the case where the measurement report type is event trigger report and the event identifier is the first event identifier, when the measurement result of the WLAN access point satisfies an event leaving condition:
a sum of Ms and Hysteresis value is less than the first threshold,
and the measurement result continuously satisfies the event leaving condition for a period of trigger time, then deleting the WLAN access point from the measurement report corresponding to the measurement task.

12. The method according to claim 10, wherein the step of generating, by the terminal, the measurement report of the measurement result according to the parameter of report configuration information, comprises:
in the case where the measurement report type is an event trigger report and the event identifier is the second identifier, when the measurement result of WLAN access point in the wireless access point mobility set is Ms, the measurement result of WLAN access point that is not in the wireless access point mobility set is Mn, when the measurement result satisfies an event trigger condition:
the measurement results of all the WLAN access points listed in the wireless access point mobility set satisfy a condition that a sum of Ms and Hysteresis value is less than the second threshold, while the measurement result of at least one WLAN access point that is not in the wireless access point mobility set satisfies a condition that a difference between Mn and Hysteresis value is greater than the second threshold, the WLAN access point is not included in the measurement report corresponding to the measurement task,
and the measurement result continuously satisfies the event trigger condition for a period of trigger time, then adding the WLAN access point that is not in the wireless access point mobility set to the measurement report corresponding to the measurement task;
in the case where the measurement report type is event trigger report and the event identifier is the second identifier, when the measurement result satisfies an event leaving condition:
the measurement result of at least one WLAN access point in the wireless access point mobility set satisfies a condition that a difference between Ms and Hysteresis value is greater than the second threshold,
and the measurement result continuously satisfies the event leaving condition for a period of trigger time, then deleting all WLAN access points from the measurement report corresponding to the measurement task and deleting the measurement report corresponding to the measurement task; or
in the case where the measurement report type is event trigger report and the event identifier is the second identifier, when the measurement result of WLAN access point that has been added to the measurement report corresponding to the measurement task satisfies an event leaving condition:
a sum of Mn and Hysteresis value is less than the second threshold,
and the measurement result continuously satisfies the event leaving condition for a period of trigger time, then deleting the WLAN access point from the measurement report corresponding to the measurement task.

13. The method according to claim 10, wherein the step of generating, by the terminal, the measurement report of the measurement result according to the parameter of report configuration information, comprises:
in the case where the measurement report type is event trigger report and the event identifier is the third event identifier, when the measurement result of WLAN access point in the wireless access point mobility set having a value of Ms satisfies an event trigger condition:
the measurement results of all WLAN access points listed in the wireless access point mobility set t satisfy a condition that a sum of Ms and Hysteresis value is less than the third threshold,
and the measurement result continuously satisfies the event trigger condition for a period of trigger time, then generating the measurement report;
in the case where the measurement report type is event trigger report and the event identifier is the third event identifier, when a measurement result of WLAN access point in the wireless access point mobility set having a value of Ms satisfies an event leaving condition:
the measurement result of at least one WLAN access point in the WLAN mobility Set satisfies a condition that a difference between Ms and Hysteresis value is greater than the third threshold,
and the measurement result continuously satisfies the event leaving for a period of trigger time, then deleting measurement report corresponding to the measurement task.

14. A WLAN measurement method for mobile network control terminal, comprising:
pre-configuring a wireless access point mobile set WLAN mobility Set to a terminal;
sending measurement configuration information to the terminal, the measurement configuration information including measurement target information or report configuration information, or the measurement target information and the report configuration information for executing measurement on an unknown WLAN access point; and
receiving the measurement report generated by the terminal according to the report configuration information.

15. The method according to claim 14, wherein the measurement target information comprises one or a combination of more than one of the following parameters:
an unknown wireless access point measurement indication, a list of wireless access points to be added, a list of wireless access points to be removed, and a carrier frequency;
the unknown wireless access point measurement indication has a value of true, or false; the list of wireless access points to be added has a value of an identifier of WLAN access point, the list of wireless access points to be removed has a value of the identifier of WLAN access point; or,
the report configuration information comprises one or a combination of more than one of the following parameters:
a measurement report type, a hysteresis value, a trigger time, and an event parameter;
wherein the measurement report type has a value of event or periodical; and the event parameter comprises an event identifier, or
the measurement report information comprises one or a combination of more than one of the following parameters:
an unknown wireless access point measurement indication, a list of wireless access points to be added, a list of wireless access points to be removed, and a carrier frequency;
the unknown wireless access point measurement indication has a value of true or false; the list of wireless access points to be added has a value of an identifier of WLAN access point, the list of wireless access points to be removed has a value of the identifier of WLAN access point;
the report configuration information comprises one or a combination of more than one of the following parameters:
a measurement report type, a hysteresis value, a trigger time, and an event parameter;
wherein the measurement report type has a value of event or periodical; and the event parameter comprises an event identifier.

16. The method according to claim 15, wherein the event parameter comprises the following event identifiers and one of corresponding threshold values:
a first event identifier, indicating that a measurement result of WLAN access point is higher than a first threshold, which corresponds to the first threshold;
a second event identifier, indicating that measurement results of all WLAN access points in the wireless access point mobility set are lower than a second threshold, while other measurement results of WLAN access points that are not in the wireless access point mobility set are higher than a third threshold value, which corresponds to the second threshold and the third threshold; and
a third event identifier, indicating that measurement results of all WLAN access points in the wireless access point mobility set are lower than a fourth threshold, which corresponds to the fourth threshold.

17. The method according to claim 16, wherein the step of receiving the measurement report generated by the terminal according to the report configuration information, comprises:
in the case where the measurement report type is event trigger report and the event identifier is the first event identifier, when the wireless access point mobility set does not include the identifier of any WLAN access point, when the terminal determines a measurement result of WLAN access point having a value of MS satisfies an event trigger condition:
a difference between Ms and Hysteresis value is greater than the first threshold,
and the measurement result continuously satisfies the event trigger condition for a period of trigger time, then the WLAN access point is included in the measurement report corresponding to the measurement task;
in the case where the measurement report type is event trigger report and the event identifier is the first event identifier, when the terminal determines the measurement result of the WLAN access point satisfies an event leaving condition:
a sum of Ms and Hysteresis value is less than the first threshold,
and the measurement result continuously satisfies the event leaving condition for a period of trigger time, then the WLAN access point is not included in the measurement report corresponding to the measurement task.

18. The method according to claim 16, wherein the step of receiving the measurement report generated by the terminal according to the report configuration information, comprises:
in the case where the measurement report type is an event trigger report and the event identifier is the second identifier, when a measurement result of WLAN access point in the wireless access point mobility set is Ms, a measurement result of WLAN access point that is not in the wireless access point mobility set is Mn, when the measurement result satisfies an event trigger condition:
the measurement results of all the WLAN access points listed in WLAN mobility Set satisfy a condition that a sum of Ms and Hysteresis value is less than the second threshold, while the measurement result of at least one WLAN access point that is not in the wireless access point mobility set satisfies a condition that a difference between Mn and Hysteresis value is greater than the second threshold,
and the measurement result continuously satisfies the event trigger condition for a period of trigger time, then the WLAN access point that is not in the wireless access point mobility set is included in the measurement report corresponding to the measurement task;
in the case where the measurement report type is event trigger report and the event identifier is the second identifier, when measurement result satisfies an event leaving condition:
the measurement result of at least one WLAN access point in the wireless access point mobility set satisfies a condition that a difference between Ms and Hysteresis value is greater than the second threshold,
and the measurement result continuously satisfies the event leaving condition for a period of trigger time, the base station does not receive the measurement report; or
in the case where the measurement report type is event trigger report and the event identifier is the second identifier, when the measurement result of WLAN access point that has been added to the measurement report corresponding to the measurement task satisfies an event leaving condition:
a sum of Mn and Hysteresis value is less than the second threshold,
and the measurement result continuously satisfies the event leaving condition for a period of trigger time, then the WLAN access point is not included in the measurement report corresponding to the measurement task.

19. The method according to claim 16, wherein the step of receiving the measurement report generated by the terminal according to the report configuration information, comprises:
in the case where the measurement report type is event trigger report and the event identifier is the third event identifier, when the terminal determines that a measurement result of WLAN access point in the wireless access point mobility set having a value of Ms satisfies an event trigger condition:
the measurement results of all WLAN access points listed in WLAN mobility Set satisfy a condition that a sum of Ms and Hysteresis value is less than the third threshold,
and the measurement result continuously satisfies the event trigger condition for a period of trigger time, all WLAN access points listed in the wireless access point mobility set are included in measurement report;
in the case where the measurement report type is event trigger report and the event identifier is the third event identifier, when the terminal determines that a measurement result of WLAN access point s in the wireless access point mobility set having a value of Ms satisfies an event leaving condition:
the measurement result of at least one WLAN access point in the WLAN mobility Set satisfies a condition that a difference between Ms and Hysteresis value is greater than the third threshold,
and the measurement result continuously satisfies the event leaving for a period of trigger time, the base station does not receive the measurement report.

20. A WLAN measurement device for mobile network control terminal, comprising:
a first receiving module configured to: receive measurement configuration information sent from a base station, the measurement configuration information including measurement target information for executing measurement on an unknown WLAN access point; and
a processing module configured to: configure a local measurement configuration parameter according to a configuration parameter included in the received measurement target information, determine a measurement target according to the local measurement configuration parameter, and execute measurement on the WLAN access point according to the determined measurement target.

21. The device according to claim 20, wherein the measurement target information received by the first receiving module comprises one or a combination of more than one of the following parameters:
an unknown wireless access point measurement indication, a list of wireless access points to be added, a list of wireless access points to be removed, and a carrier frequency;
the unknown wireless access point measurement indication has a value of true or false; the list of wireless access points to be added has a value of an identifier of WLAN access point, the list of wireless access points to be removed has a value of the identifier of WLAN access point.

22. The method according to claim 21, wherein the processing module configured to configure the local measurement configuration parameter according to the configuration parameter included in the received measurement target information, comprises:
when the presence of the received configuration parameter in the local measurement configuration parameter is determined, the local configuration parameter is updated according the received configuration parameter; when that the absence of the received configuration parameter in the local measurement configuration parameter is determined, the received configuration parameter is saved.

23. The device according to claim 21, wherein the processing module configured to determine the measurement target according to the local measurement configuration parameter, comprises:
under the condition where the local measurement configuration parameter includes the unknown wireless access point indication and the value of the parameter is: true,
when the local measurement configuration parameter further comprises the carrier frequency, determining that the WLAN access point on a frequency or waveband designated by the carrier frequency is the measurement target; when the local measurement configuration parameter does not include the carrier frequency, determining that all WLAN access points on all frequencies or wavebands are the measurement target; or when the local measurement configuration parameter include the unknown wireless access point indication and the value of the parameter is: true, then measuring the WLAN access point on all frequencies or wavebands.

24. The device according to claim 21, wherein the processing module configured to determine the measurement target according to the local measurement configuration parameter, comprises:
under the condition where the local measurement configuration parameter does not include the unknown wireless access point indication or include the unknown wireless access point indication but the value is: false,
when the local measurement configuration parameter further comprises the carrier frequency, determining the WLAN access point on a frequency or waveband designated by the carrier frequency matching the identifier in the list of wireless access points to be added is the measurement target; when the local measurement configuration parameter does not include the carrier frequency, determining the WLAN access points on all frequencies or wavebands matching the identifier in the list of wireless access points to be added is the measurement target.

25. The device according to according to claim 23 or claim 24, the measurement configuration information received by the first receiving module further comprises: report configuration information, and the device further comprises:
an acquisition module is configured to: acquire the wireless access point mobility set sent from the base station.

26. The device according to claim 25, wherein the report configuration information received by the first receiving module comprises one or a combination of more than one of the following parameters:
a measurement report type, a hysteresis value, a trigger time, and an event parameter,
wherein the measurement report type has a value of: event or periodical; the event parameter includes an event identifier.

27. The device according to claim 26, wherein the event parameter in the report configuration information received by the first receiving module, comprises one of the following event identifiers and corresponding threshold values:
a first event identifier, indicating that a measurement result of WLAN access point is higher than a first threshold, which corresponds to a first threshold value;
a second event identifier, indicating that measurement results of all WLAN access points in WLAN mobility Set are lower than a second threshold, while other measurement results of WLAN access points that are not in WLAN mobility Set are higher than a third threshold value, which corresponds to a second threshold value and a third threshold value; and
a third event identifier, indicating that measurement results of all WLAN access points in WLAN mobility Set are lower than a fourth threshold, which corresponds to a fourth threshold value.

28. The device according to claim 27, the device further comprises:
a first sending module configured to: generate a measurement report of the measure result according to the parameter of report configuration information, and report.

29. The device according to claim 28, wherein the first sending module is configured to:
in the case where the measurement report type is event trigger report and the event identifier is the first event identifier, when the wireless access point mobility set does not include the identifier of any WLAN access point, when the measurement result of the WLAN access point having a value of MS satisfies an event trigger condition:
a difference between Ms and Hysteresis value is greater than the first threshold,
and the measurement result continuously satisfies the event trigger condition for a period of trigger time, then add the WLAN access point to the measurement report corresponding to the measurement task;
in the case where the measurement report type is event trigger report and the event identifier is the first event identifier, when the measurement result of the WLAN access point satisfies an event leaving condition:
a sum of Ms and Hysteresis value is less than the first threshold,
and the measurement result continuously satisfies the event leaving condition for a period of trigger time, then delete the WLAN access point from the measurement report corresponding to the measurement task.

30. The device according to claim 28, wherein the first sending module is configured to:
in the case where the measurement report type is event trigger report and the event identifier is the second identifier, when the measurement result of WLAN access point in the wireless access point mobility set is Ms, the measurement result of WLAN access point that is not in the wireless access point mobility set is Mn, when the measurement result satisfies an event trigger condition:
the measurement results of all the WLAN access points listed in the wireless access point mobility set satisfy a condition that a sum of Ms and Hysteresis value is less than the second threshold, while the measurement result of at least one WLAN access point that is not in the wireless access point mobility set satisfies a condition that a difference between Mn and Hysteresis value is greater than the second threshold,
and the measurement result continuously satisfies the event trigger condition for a period of trigger time, then add the WLAN access point that is not in the wireless access point mobility set to the measurement report corresponding to the measurement task;
in the case where the measurement report type is event trigger report and the event identifier is the second identifier, when the measurement result satisfies an event leaving condition:
the measurement result of at least one WLAN access point in the wireless access point mobility set satisfies a condition that a difference between Ms and Hysteresis value is greater than the second threshold,
and the measurement result continuously satisfies the event leaving condition for a period of trigger time, then delete all WLAN access points from the measurement report corresponding to the measurement task and delete the measurement report corresponding to the measurement task; or
in the case where the measurement report type is event trigger report and the event identifier is the second identifier, when the measurement result of WLAN access point that has been added to the measurement report corresponding to the measurement task satisfies an event leaving condition:
a sum of Mn and Hysteresis value is less than the second threshold,
and the measurement result continuously satisfies the event leaving condition for a period of trigger time, then delete the WLAN access point the from measurement report corresponding to the measurement task.

31. The device according to claim 28, wherein the first sending module configured to generate a measurement report of the measure result according to the parameter of report configuration information, comprises:
in the case where the measurement report type is event trigger report and the event identifier is the third event identifier, when the measurement result of WLAN access point in the wireless access point mobility set having a value of Ms satisfies an event trigger condition:
the measurement results of all WLAN access points listed in the wireless access point mobility set satisfy a condition that a sum of Ms and Hysteresis value is less than the third threshold,
and the measurement result continuously satisfies the event trigger condition for a period of trigger time, then generate the measurement report;
in the case where the measurement report type is event trigger report and the event identifier is the third event identifier, when a measurement result of WLAN access point in the wireless access point mobility set having a value of Ms satisfies an event leaving condition:
the measurement result of at least one WLAN access point in the WLAN mobility Set satisfies a condition that a difference between Ms and Hysteresis value is greater than the third threshold,
and the measurement result continuously satisfies the event leaving for a period of trigger time, then delete measurement report corresponding to the measurement task.

32. A WLAN measurement device for a mobile network control terminal, comprising:
a second sending module configured to: pre-configure a wireless access point mobile set to a terminal, and configured to: send measurement configuration information to the terminal, the measurement configuration information including measurement target information or report configuration information, or the measurement target information and the report configuration information for executing measurement on an unknown WLAN access point; and
a second receiving module configured to: receive the measurement report generated by the terminal according to the report configuration information.

33. The device according to claim 32, the measurement target information sent from the second sending module, comprises one or a combination of more than one of the following parameters:
an unknown wireless access point measurement indication, a list of wireless access points to be added, a list of wireless access points to be removed, and a carrier frequency;
the unknown wireless access point measurement indication has a value oftrue, or false; the list of wireless access points to be added has a value of an identifier of WLAN access point, the list of wireless access points to be removed has a value of the identifier of WLAN access point; or,
the measurement target information sent from the second sending module comprises one or a combination of more than one of the following parameter:
a measurement report type, a hysteresis value, a trigger time, and an event parameter;
wherein the measurement report type has a value of event or periodical; the event parameter comprises an event identifier; or
the measurement target information sent from the second sending module, comprises one or a combination of more than one of the following parameter:
an unknown wireless access point measurement indication, a list of wireless access points to be added, a list of wireless access points to be removed, and a carrier frequency;
the unknown wireless access point measurement indication has a value of true or false; the list of wireless access points to be added has a value of an identifier of WLAN access point, the list of wireless access points to be removed has a value of the identifier of WLAN access point;
the measurement target information sent from the second sending module comprises one or a combination of more than one of the following parameter:
a measurement report type, a hysteresis value, a trigger time, and an event parameter;
wherein the measurement report type has a value of event or periodical; and the event parameter comprises an event identifier.

34. The device according to claim 33, wherein the measurement target information sent from the second sending module, comprising the following event parameter and one of the corresponding threshold:
a first event identifier, indicating that a measurement result of WLAN access point is higher than a first threshold, which corresponds to the first threshold;
a second event identifier, indicating that measurement results of all WLAN access points in the wireless access point mobility set are lower than a second threshold, while other measurement results of WLAN access points that are not in the wireless access point mobility set are higher than a third threshold value, which corresponds to the second threshold and the third threshold; and
a third event identifier, indicating that measurement results of all WLAN access points in the wireless access point mobility set are lower than a fourth threshold, which corresponds to the fourth threshold.

35. The device according to claim 34, wherein the second receiving module is configured to:
in the case where the measurement report type is event trigger report and the event identifier is the first event identifier, when the wireless access point mobility set does not include the identifier of any WLAN access point, when the terminal determines a measurement result of WLAN access point having a value of MS satisfies an event trigger condition;
a difference between Ms and Hysteresis value is greater than the third threshold,
and the measurement result continuously satisfies the event trigger condition for a period of trigger time, then the WLAN access point is included in the measurement report corresponding to the measurement task;
in the case where the measurement report type is event trigger report and the event identifier is the first event identifier, when terminal determines that the measurement result of the WLAN access point satisfies an event leaving condition:
a sum of Ms and Hysteresis value is less than the first threshold,
and the measurement result continuously satisfies the event leaving condition for a period of trigger time, so the WLAN access point is not included in measurement report.

36. The device according to claim 34, wherein the second receiving module is configured to:
in the case where the measurement report type is an event trigger report and the event identifier is the second identifier, when a measurement result of WLAN access point in the wireless access point mobility set is Ms, a measurement result of WLAN access point that is not in the wireless access point mobility set is Mn, when the measurement result satisfies an event trigger condition:
the measurement results of all the WLAN access points listed in WLAN mobility Set satisfy a condition that a sum of Ms and Hysteresis value is less than the second threshold, while the measurement result of at least one WLAN access point that is not in the wireless access point mobility set satisfies a condition that a difference between Mn and Hysteresis value is greater than the second threshold,
and the measurement result continuously satisfies the event trigger condition for a period of trigger time, then the WLAN access point that is not in the wireless access point mobility set is included in the measurement report corresponding to the measurement task;
in the case where the measurement report type is event trigger report and the event identifier is the second identifier, when measurement result satisfies an event leaving condition:
the measurement result of at least one WLAN access point in the wireless access point mobility set satisfies a condition that a difference between Ms and Hysteresis value is greater than the second threshold,
and the measurement result continuously satisfies the event leaving condition for a period of trigger time, the base station does not receive the measurement report; or
in the case where the measurement report type is event trigger report and the event identifier is the second identifier, when the measurement result of WLAN access point that has been added to the measurement report corresponding to the measurement task satisfies an event leaving condition:
a sum of Mn and Hysteresis value is less than the second threshold,
and the measurement result continuously satisfies the event leaving condition for a period of trigger time, then the WLAN access point is not included in the measurement report corresponding to the measurement task.

37. The device according to claim 34, wherein the second receiving module configured to receive the measurement report generated by the terminal according to the report configuration information, comprises:
in the case where the measurement report type is event trigger report and the event identifier is the third event identifier, when the terminal determines that a measurement result of WLAN access point in the wireless access point mobility set having a value of Ms satisfies an event trigger condition:
the measurement results of all WLAN access points listed in the wireless access point mobility set satisfy a condition that a sum of Ms and Hysteresis value is less than the third threshold,
and the measurement result continuously satisfies the event trigger condition for a period of trigger time, all WLAN access points listed in the wireless access point mobility set are included in measurement report;
in the case where the measurement report type is event trigger report and the event identifier is the third event identifier, when the terminal determines that a measurement result of WLAN access point s in the wireless access point mobility set having a value of Ms satisfies an event leaving condition:
the measurement result of at least one WLAN access point in the WLAN mobility Set satisfies a condition that a difference between Ms and Hysteresis value is greater than the third threshold,
and the measurement result continuously satisfies the event leaving for a period of trigger time, the base station does not receive the measurement report.

38. A terminal, comprising the WLAN measurement device for mobile network control terminal according to any one of claims 20-31.

39. A base station, comprising the WLAN measurement device for mobile network control terminal according to any one of claims 32-37.

40. A WLAN measurement system for mobile network control terminal, comprising:
a terminal, including:
a first receiving module configured to: receive measurement configuration information sent from a base station, the measurement configuration information including measurement target information for executing measurement on an unknown WLAN access point; and
a processing module configured to: configure a local measurement configuration parameter according to a configuration parameter included in the received measurement target information, determine a measurement target according to the local measurement configuration parameter; and execute measurement on the WLAN access point according to the determined measurement target, and
a base station, including:
a second sending module configured to: pre-configure a wireless access point mobile set to a terminal, and configured to: send measurement configuration information to the terminal, the measurement configuration information including measurement target information or report configuration information, or the measurement target information and the report configuration information for executing measurement on an unknown WLAN access point.

41. The system according to claim 41,
the terminal, further comprises,
an acquisition module is configured to: acquire the wireless access point mobility set sent from the base station;
a first sending module configured to: generate a measurement report of the measure result according to the parameter of report configuration information, and report,
the base station, further comprises:
a second receiving module configured to: receive the measurement report generated by the terminal according to the report configuration information.

42. A WLAN measurement method for mobile network control terminal, comprising:
pre-configuring, by a base station, a wireless access point mobile set to a terminal, and sending measurement configuration information to the terminal, the measurement configuration information at least including measurement target information or report configuration information, or the measurement target information and the report configuration information for executing measurement on an unknown WLAN access point;
receiving, by the terminal, the measurement configuration information sent from the base station;
configuring, by the terminal, a local measurement configuration parameter according to a configuration parameter included in the received measurement target information;
determining, by the terminal, a measurement target by terminal according to the local measurement configuration parameter; and
executing, by the terminal, measurement on WLAN access point according to the determined measurement target.

43. The method according to claim 42, the method further comprising:
generating, by the terminal, a measurement report of measurement result according to the parameter of the report configuration information; and
receiving, by the base station, measurement report generated by the terminal according to the report configuration information.
